# EUROPEAN PATENT SPECIFICATION

(11) **EP 3 841 255 B1**
(45) Date of publication and mention of the grant of the patent: **26.07.2023**
(21) Application number: 19852266.6
(22) Date of filing: 19.08.2019
(51) Int. Cl.: E02F 9/22, F04B 49/06, F15B 11/16, E02F 3/96, F04B 17/03, F04B 49/08, F04B 49/20, E02F 9/20, H02P 7/00, H02P 6/06

(54) **DEMOLITION ROBOT AND METHOD FOR SUPPLYING HYDRAULIC POWER TO A HYDRAULICALLY POWERED TOOL AT A DEMOLITION ROBOT**
ABBRUCHROBOTER UND VERFAHREN ZUR VERSORGUNG EINES HYDRAULISCH ANGETRIEBENEN WERKZEUGES AN EINEM ABBRUCHROBOTER
ROBOT DE DÉMOLITION ET PROCÉDÉ DE FOURNITURE D'ÉNERGIE HYDRAULIQUE À UN OUTIL HYDRAULIQUE AU NIVEAU D'UN ROBOT DE DÉMOLITION

(30) Priority: 24.08.2018 SE 1851013
(43) Date of publication of application: 30.06.2021
(73) Proprietor: Brokk Aktiebolag, 931 27 Skelleftea (SE)
(72) Inventor: ANDERSSON, Stefan, 931 52 Skellefteå (SE)
(74) Representative: Zacco Sweden AB
(86) International application number: PCT/SE2019/050761
(87) International publication number: WO 2020/040684

(56) References cited:
- EP-A1- 2 031 135
- EP-A1- 2 031 135
- EP-A1- 2 314 848
- EP-A1- 2 541 070
- EP-A1- 2 631 373
- WO-A1-2014/189445
- WO-A1-2016/204685
- WO-A1-2017/069692
- WO-A1-2017/069692
- JP-A- 2008 256 037
- US-A1- 2014 046 552
- US-A1- 2015 275 927

## Description

### TECHNICAL FIELD

The present invention relates to a remote-controlled demolition robot that is supplied with hydraulic power via a load-sensing system, a so-called LS system, from a power supply assembly included in the demolition robot as well as a method for supplying hydraulic power to a tool sustained by the demolition robot.

### BACKGROUND

As regards remote-controlled demolition robots that use hydraulically powered tools, problems can arise when the hydraulic tool's hydraulic pressure and requirement for hydraulic flow differ substantially from the hydraulic pressure and the flow requirement of other actuators and driving mechanisms such as a hydraulic cylinder to operate an arm constituent in the demolition robot, which in its free end carries said tool. For example, an operator of the demolition robot may experience that the operable arm does not react to the operator's control command to perform movement of the arm concurrently with a power-consuming tool performing the work.

In the case of hydraulic systems of the displacement type, a fluid is forced to stream by means of the operation of a pump whereby the fluid can be pressurized corresponding to the pressure caused by the load. Said load can be constituted by a load moment from a hydraulic motor or the load force from a hydraulic cylinder. The power that is transferred in a hydraulic system is defined by the fluid pressure (N/m²) multiplied by the volume flow (m³/second). Without control, all hydraulic flow in a system would follow the law of least resistance, i.e. primarily stream to the consumer or consumers or the load offering least resistance of pressure (back pressure).

For the hydraulic flow not to flow uncontrollably without de facto being delivered to the consumer or the consumers at the demolition robot which currently have the strongest power requirement, advanced load-sensing or Load Sensing systems, so-called LS systems, are used for supplying hydraulic power. LS systems enables controlling and regulating of the hydraulic flow to the various loads of the demolition robot, i.e. to the range of various function of the demolition robot that consume hydraulic power.

In LS systems of prior art demolition robots, a pump with integrated flow regulator is used. The controllable pump forms part of a regulating device, whereby a hydraulic measuring signal at a consumer informs the pump of the degree to which it is to angle outwards to give the current consumer the desired flow. The indicated pump flow is automatically adapted to the sum of the current flow requirement of all consumers if more consumers are activated simultaneously. When all directional valves are in a neutral state, the pump is angled inwards to the maximum and thus gives "0 flow". LS systems are the most common system types for work hydraulic in mobile machine equipment in that both the pump pressure and the flow can automatically be adjusted to the current requirement in each operation situation.

It should be mentioned that LS systems generate an "unnecessary" power loss, which in average amounts to about 10% of the hydraulic power input. However, by means of suitable system settings, this power loss can be minimized, but thereby at the sacrifice of the system's response times (reaction times) increasing and also the pump flow's dependence on the viscosity of the hydraulic fluid. WO2017069692 discloses the preambles of independent claims 1 and 8. The invention is set out in the independent claims with preferred embodiments forming the subject-matter of the dependent claims.

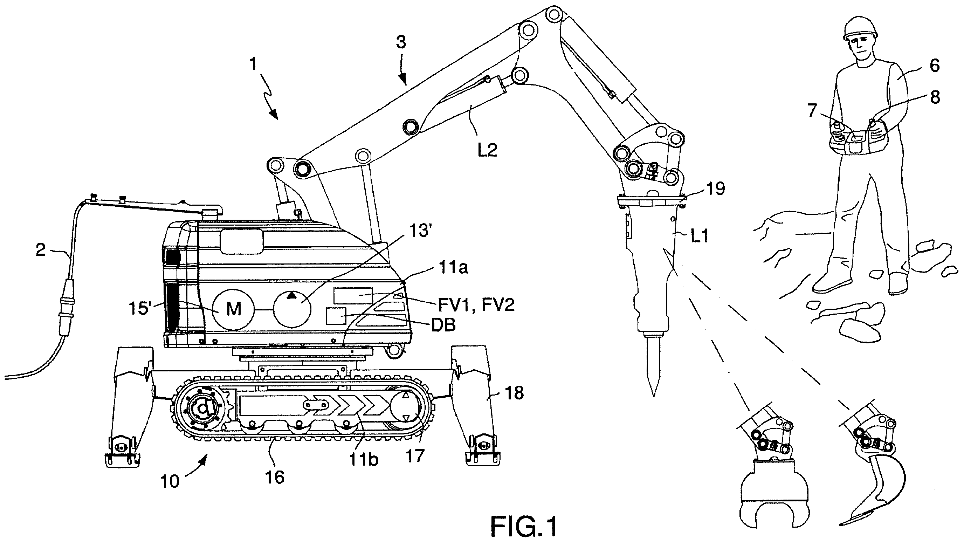

Fig. 1 shows an electrically powered demolition robot 1 of the type intended, via a cable 2, to be connected to a socket outlet in an supply mains, for example a 400 V AC three-phase circuit. The demolition robot 1 has an operable arm 3 at the free end of which a consumer L1 in the form of a tool such as a hydraulically powered hammer is sustained. To perform movements, the arm is affected by one or a plurality of hydraulic cylinders, which are viewed as consumers and denoted L2 in the figure. An operator 6 walks beside the demolition robot 1 and remote-controls it via a radio link by means of a portable operation cabinet 7, equipped with the required control sticks 8 and lever. At its free end, the arm 3 carries a tool in the form of a hydraulically powered hammer, which is viewed as consumer and denoted L1 in the figure. Compared with a hydraulic cylinder, a hydraulically powered hammer, which is driven by a hydraulic motor, is to be considered a particularly power-consuming tool, the volume flow requirement of which is very high.

The hydraulic hammer is largely used at a demolition robot. Due to the hydraulic hammer's relatively large power requirement relative to for example a hydraulic cylinder for an operable arm 2, the operator 6 may experience that the arm 3 does not respond to the operator's control command to perform movement of the arm concurrently with the tool performing the work because the amount of the pressurized hydraulic flow simply does not suffice.

As mentioned above, the basic principles of a mobile LS system is that it is load-sensing and pressure-compensated, implying that a specific stick position of the operator's 6 operation cabinet 7 generates an operating signal that represents a desired flow to a consumer, i.e. to a load or hydraulic function independently of the load of this and independently of the flow to and the load on other consumers.

In the following, the expression "hydraulically energized function" relates to a function or consumers that by an operator are activated for operation by means of a control stick or similar lever on a control cabinet.

At a set stick position, a consumer requires for example a hydraulic cylinder, a specific flow of a controllable pump with variable displaced volume constituent in the system. Said required flow requirement is controlled and guided by a sensing device by way of pressure measurement and by the impact of hydraulic measuring signals, i.e. in principle a pressure signal via a pipe that is connected between a function valve and an LS connection constituent in the pump. The controllable pump forms part of a regulating device that senses and via the pressure signal informs the pump of the degree to which it is to angle outwards to give the current consumer the desired flow. As long as the pressure fall over the directional valve and the consumer is constant and not deviates substantially from a pre-determined pressure level, the system perceives it as the consumer receiving the required flow.

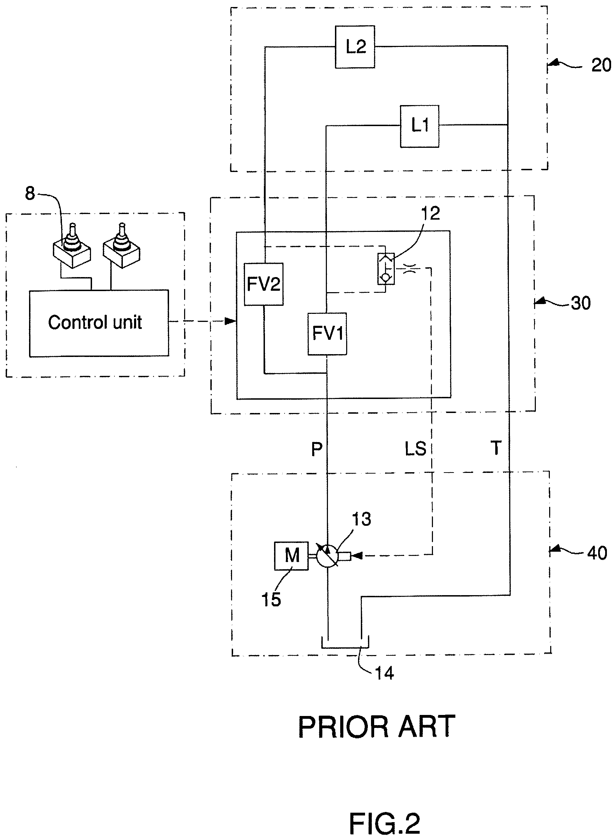

Fig. 2 shows the principle of an LS system of a known demolition robot in more detail. Schematically, the system comprises a group of consumers, generally denoted 20, illustrated as a first and a second consumer L1, L2 and of which, the first consumer L1 can be constituted by a hydraulic motor to drive a hydraulic hammer, and the second consumer L2 by a hydraulic cylinder for actuating the demolition robot's arm 3.

The LS system further comprises a pump 13, a tank 14 for hydraulic fluid as well as an electric motor 15, which according to the prior art, is a three-phase asynchronous motor (AC motor), i.e. a motor with constant revolution speed at an indicated rated output. The rotational speed of this type of motor is usually in the range between 1800 and 3600 rpm depending on the type of machine.

The LS system comprises three lines; a supply line P, a return line T and a load-sensing line LS. Via the supply line P, hydraulic fluid is supplied from the tank 14 via the pump 13 to the first and the second consumers L1, L2. Via the return line T, hydraulic fluid is returned from said first and second consumers L1, L2 to the tank 14. The load-sensing line LS forms part of a sensor device denoted 30, by which, via a valve 12, a hydraulic measuring signal is obtained from a hydraulically activated function and which can for example indicate a highest occurring pressure at a measuring point between a directional valve FV1, FV2, included in the system and consumers L1, L2. The hydraulic measuring signal from the valve 12 is directly connected to the pump's 13 LS entry and this unit forms part of a regulating device, generally denoted 40. The regulating device 40 is hydraulically connected to the load-sensing line LS and to at least one of the supply lines P and the return line T. By means of the hydraulic measuring signal the pump's 13 operating state is affected, so that a pre-determined or required flow is maintained outgoing from the prevailing pressure of the activated hydraulic function or the consumer.

The pump 13 comprises for the purpose a controllable pump with variable displacement, which implies that the volume stream of flow from the pump can be adjusted through variation of the pump's angular position. However, the revolution speed of the pump's 13 AC drive motor 15 is constant. Based on the prevailing hydraulic pressure of the consumer the variable pump 13 is thus controlled in such a manner that it delivers the flow that is required according to the stick position 8 set by the operator 6 on the portable operation cabinet 7.

The LS system has a range of advantages, not least that the flow from pump 13 to the consumers L1, L2 can automatically be adjusted to the current requirement and that the pump can be controlled down (angled in), so that it gives "0 flow" to avoid loss in case of idle running or at very low power requirement.

However, this only applies as long as the sum of the hydraulic flow required by means of the sticks 8 on the operation cabinet 7 to the consumers L1, L2 is lower than or equal to the maximum hydraulic flow that the pump 13 can deliver.

When the total required hydraulic flow to both the first and second consumers L1, L2 exceeds the hydraulic flow that can as a maximum be delivered from the pump 13, the flow is primarily guided to the consumer that has the lowest load and thereby the lowest registered pressure. The consumer with the highest load (highest pressure) will at worst not get any hydraulic flow at all and can then stop completely. The phenomenon, that one or more consumers and thus functions of components surprisingly get no flow, is usually called "puncture".

A solution to the problem has so far been to over-dimension the demolition robot's 1 pump 13 and as a consequence thereby also the associated drive motor 15, so that the flow from the pump is always sufficient, independently of the actuation indicated by an operator 6 on the operation cabinet 7 and/or which consumers L1, L2 that are activated for joint or combined operation. Such over-dimension not only has the disadvantage that the hydraulic system becomes more expensive and more power-consuming, but also that the system overall requires more space and becomes heavier, which is not desired, particularly not in the case of a mobile system for a demolition robot.

WO 2917/069692 A1 discloses a demolition robot having a separate pressure-sensing circuit by which an LS control function in the demolition robot temporarily can be bypassed.

### Summary

A first object of the present invention is thus to provide a demolition robot that is supplied with hydraulic power via a load-sensing system, an LS system, from a power supply assembly comprised by the demolition robot, which solves this problem and which makes it possible, without risk of puncture, to provide a small, compact energy-efficient system that in an improved dynamic or feedback manner can meet the power requirement of the demolition robot.

Another object of the invention is to provide a method for supplying hydraulic power to one or more of the loads sustained by the demolition robot such as a hydraulically powered tool.

This first object of the invention is resolved by the demolition robot having the features and characteristics stated in claim 1.

The second object is resolved by a method having the features and characteristics stated in claim 10. Further characteristics and advantages of the invention appear from the dependent claims.

### Short description of the drawing

The following is a description of a demolition robot according to the invention that is supplied with hydraulic power via a load-sensing system, a so-called LS system, from a power supply assembly included in the demolition robot, more specifically wherein;
Fig. 1 shows a side view of a remote-controlled demolition robot according to the invention that is supplied with hydraulic power via a load-sensing system, a so-called LS system, from a power supply assembly included in the demolition robot.
Fig. 2 schematically shows a block diagram of a load-sensing system, a so-called LS system, that is comprised in a power supply assembly at a known demolition robot,
Fig. 3 schematically shows a block diagram of a load-sensing system, a so-called LS system, according to the invention that is comprised in a power supply assembly at a demolition robot,
Fig. 4 shows a block diagram of the revolution speed control of an electronically controllable permanent magnet motor (PM motor), specifically a converter-fed permanent magnet AC motor (PMAC), which can be comprised in the present invention, and
Fig. 5 schematically shows an illustration in graphic form of the pump capacity at varying revolution speed with a permanent magnet motor (PM motor) of the high-speed type, which allows revolution speed regulation according to the invention.

### Detailed description

Fig. 1 shows an electrically powered wrecking and demolition robot 1, in the following designated demolition robot intended, via a cable 2, to be connected to a socket in a mains supply, for example with mains voltage 400 V AC. The demolition robot 1 has an operable arm 3 at the free end of which a tool in the form of a hydraulically powered hammer is sustained. An example of another common tool in the form of a concrete crusher respectively a dipper is also shown in the figure.

To carry out movements, the arm is affected by hydraulic cylinders. The hydraulic hammer respectively the hydraulic cylinder represent functions that form a first consumer L1 and a second L2, respectively. An operator 6 walks beside the demolition robot 1 and remote-controls it via a radio link by means of a portable operation cabinet 7, equipped with the required control sticks 8 and lever. The operator 6 can thus constantly be at adequate safety distance from the working area of the demolition robot.

The demolition robot 1 generally comprises a carriage 10 with a top 11a and a base 11b. The top is 11a rotatably bedded on the base 11b for swinging in a horizontal plane about a vertical axis. The demolition robot 1 comprises a mobile hydraulic system with a hydraulic driving mechanism that provides said first respectively second consumers L1, L2 with hydraulic flow. The mobile hydraulic system's hydraulic driving mechanism comprises a hydraulic pump 13', which is driven by an electric motor 15' with adjustable revolution speed. This electric motor 15' is advantageously of a permanent magnet type with highly adjustable working area.

The expression drive motor with highly adjustable working area relates merely to the principles of the invention that the motor can at least work at a large revolution speed span and revolution speed that in any case is twice or more as high as the normal drive speed for this type of conventional three-phase asynchronous motor (AC motor) in the revolution speed area of 1450 rpm, with which prior art demolition robots have been equipped. A suitable PM motor should at least be able to work from 0 revolutions/minute up to about 2000-3000 revolutions/minute or more.

Swinging of the top 11a takes place by means of a hydraulic motor not shown in the figure. The carriage base 11b is provided with a propulsion device comprising a track 16. The track 16 is powered by hydraulic motors 17. 18 denotes a support leg.

The arm 3 is at its free end provided with a tool attachment 19 in which various types of tools or appliances can be removably affixed and connected for hydraulic operation. The robot's arm 3 and other function units that consume hydraulic flow can be coupled to and controlled by means of a hydraulic valve block (monoblock), which is accommodated in the demolition robot 1. A valve block comprises a plurality of various directional valves of which the figures shows a first directional valve FV1 and a second directional valve FV2 for adjustment of the hydraulic flow to said first respectively second consumers L1, L2.

The instantaneous power requirement of the demolition robot 1 can vary substantially depending on the hydraulically powered working component included in the demolition robot such as a hydraulic cylinder or a hydraulic motor that is to be provided with the required input power (hydraulic pressure and flow).

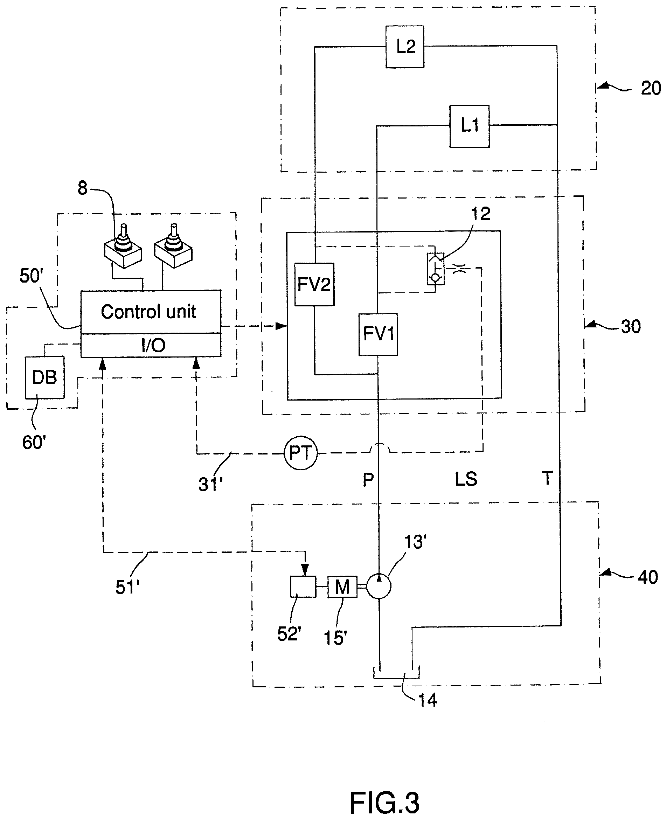

Fig. 3 schematically shows an LS system that is comprised in a power supply system according to the invention. L1 comprises a first consumer and L2 a second consumer. The first consumer L1 can be constituted by a hydraulic motor to drive the hydraulic hammer and the second consumer L2 by a hydraulic cylinder for actuating the demolition robot's 1 arm 3. In the known manner, the LS system further comprises a pump 13', preferentially of the piston type, which is well suited for revolution speed changes, the tank 14 for hydraulic fluid an electric motor 15' with variable revolution speed.

The LS system comprises three lines; a supply line P, a return line T and a load-sensing line LS. Via the supply line P, hydraulic fluid is supplied from the tank 14 via pump 13 to the consumers L1, L2. Via the return line T, hydraulic fluid is returned from the consumers L1, L2 to the tank 14. PT denotes a pressure transmitter, which is connected to the LS outlet of the function valve and which pressure transmitter can generate an electronic measuring signal 31' with regard to the pressure.

This electronic measuring signal 31' is obtained via the load-sensing line LS and a valve 12 and can indicate a highest occurring pressure at a hydraulically activated function, i.e. from a measuring point between a directional valve FV1, FV2, comprised by the system. and consumers L1, L2.

A group of consumers, denoted 20, is illustrated as a first and a second consumer L1, L2 and of which, the first consumer L1 can be constituted by a hydraulic motor to drive a hydraulic hammer, and the second consumer L2 by a hydraulic cylinder for actuating the demolition robot's arm 3.

In one embodiment, the drive motor 15 can comprise a conventional AC induction motor, the revolution speed of which is controlled by a frequency converter or permanent magnet motors (EC or PM motors). A frequency converter controls the revolution speed of the motor by changing the frequency of the supply mains from the usual 50 Hz upwards to 65 Hz or downwards to 5-10 Hz.

In another embodiment, the motor can comprise a DC motor, the rotational speed of which is controlled by means of power adjustment and suitable feedback (Swedish: återkoppling), wherein part of the output signal is coupled to the system's input signal.

In an alternative embodiment, the electric motor 15' or power source can comprise an electronically controllable permanent magnet motor (PM motor), particularly an inverter-fed permanent magnet AC motor, a so-called PMAC. A PM motor must be driven by an electronic converter, which takes line current, resets it and generates new current with a frequency that is adjusted to occurring operating conditions.

In a clarifying object, the figures in the drawing have reference symbols for such parts that are added or are different from the prior art shown in Fig. 2 are denoted by primes.

The rotational speed for this type of PM motor is not only controllable but is also substantially above the revolution speed of the three-phase asynchronous motor (AC motor) that prior art demolition robots 1 have been provided with.

The load-sensing line LS consequently forms part of a sensing device, denoted 30, with which, via a valve 12 and pressure transmitter PT, said electronic measuring signal 31' can be obtained from a hydraulically activated function. Unlike the prior art described above, with reference to Fig. 2, the hydraulic measuring signal according to the present invention is not analogously hydraulic, i.e. directly connected to the LS entry of a pump 13 with variable displacement volume. Instead, according to the present invention, a sensing device 30 with a pressure transmitter PT is formed, which can generate an electronic measuring signal 31' that can be addressed to an electronic control unit, denoted 50', which with the operation cabinet's 7 control sticks 8 can also communicate. The control unit 50' can suitably be programmable and CPU-based.

The control unit 50' comprises a computer program, i.e. software that based on the electronic measuring signal 31' and by the stick position 8 on the operation cabinet 7 set by the operator 6, via a control signal 51' to a drive assembly comprised by the PM motor, can control and adjust the revolution speed of the motor 15', so that the pump 13' can deliver the power in the form of flow and pressure of the hydraulic fluid that the hydraulically activated function or consumers L1 or L2 require.

According to the invention, the electronically controlled PM motor 15' with adjustable revolution speed together with the pump 13' forms part of a regulating device, generally denoted 40. The electronically controlled PM motor 15' can thus automatically adjust its revolution speed based on the control stick result 8 and thereby to the current requirement for flow and pressure of the consumers L1, L2. As, according to the invention, the pump's 13' delivered flow is controlled by means of revolution speed regulation of the PM motor 15', unlike the prior art described above, wherein the pump's (electric motor's) revolution speed is constant, and the flow delivered by the pump is controlled by means of a pump with variable displacement volume in which the pump's working shovels or blades are angled inwards/outwards to provide the current consumer with the desired flow, there is in the present invention no requirement for a pump with variable displacement, but a relatively cheap fixed-displacement pump can advantageously be used.

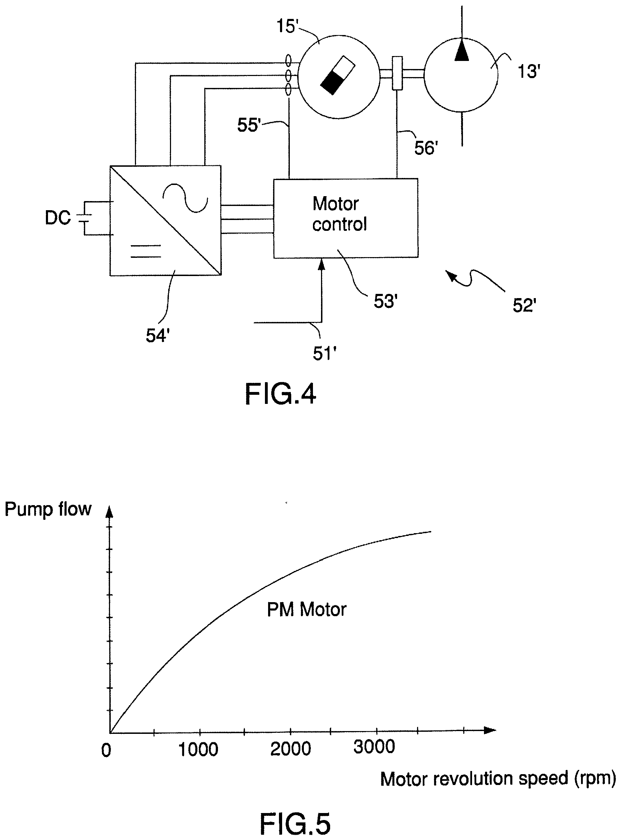

Fig. 5 further illustrates in the form of a diagram graph how the pump capacity and the flow Q can be varied by means of revolution speed regulation by a PM motor 15' of the high-speed type according to the invention.

Due to the PM motor's high revolution speed area, for example between 0 and 40,000 rpm, in which it maintains a high yield, also in the lower revolution speed registrations, optimum performance and a relatively low sound level can be obtained. Especially when the demolition robot 1 works with simpler tools that result in lower power requirement (reduced motor revolution speed) unlike the known types of demolition robots with conventional three-phase asynchronous motor (AC motor), the noise level of which is essentially constant during an entire working cycle after start independently of the working tool.

Mechanical output in Watt (W) of an electric motor is calculated according to the formula P = M × ω where M=torque (Nm) and ω=angular speed (rad/s). It should be understood that the PM motor power largely increases with the revolution speed and hence the angular speed. Due to its high power/weight ratio and high revolution speed area, permanent magnet motors, PM motors, have the advantage that also a very small motor can offer very high mechanical power in the higher revolution speed registrations. As the size of an electric machine at a given power level can been reduced by increased rotational speed, the PM machines have the advantage that they, where required, can offer very high power by rotating synchronously in the working area at very high, adjustable revolution speed registrations, for example 0-10,000 revolutions per minute or more.

As the system according to the present invention uses electronic direct control of a combination of PM motor and pump, the system according to the invention can offer very quick response times (reaction times), which has been a problem with the prior art.

Fig. 4 further shows an example of a motor drive assembly, generally denoted 52', for a permanent magnet motor 15' of the AC type, a so-called PMAC motor according to the invention. It should be noted that unlike inductive alternating current motors (AC motors), permanent magnet motors (PM motor) must be controlled and managed with a motor drive assembly 52' for motor control.

Said motor drive assembly 52' includes a motor control unit 53', which is connected to the control unit 50' for transfer of a variable control signal 51' to the PMAC motor 15' and powering of the pump 13' with the desired operational parameters. PMAC motors have the simplicity and reliability of the AC induction motor and at the same time they offer higher efficiency, synchronous operation and the possibility of using a smaller frame size and can thereby deliver a given torque with a more compact and light-weight machine. When each consumer's L1, L2 flow requirement is down to 0, the pump and motor are at a complete standstill, whereby all forms of no-load loss are eliminated.

In the present exemplary embodiment, pulse width modulation (PWM) is used for controlling the torque and angular speed (revolution speed) of the PMAC motors. As, according to the present invention, it is about electronic control data 31', 51', contrary to known demolition robots that use an analogous hydraulic pressure for controlling the pump, it is imaginable that the control unit 50 can comprise a computer-readable storage medium 60, denoted DB in Fig. 3, for storing, control data, error codes or other useful data for performing analysis of control data, for example in the case of service.

The regulation device 40 comprises a drive assembly 54' for the PMAC motor, the function of which, as it is well-known, will not be described in more detail in the following. The drive assembly 54' largely comprises a three-phase inverter for conversion of an incoming DC voltage to a three-phase alternating voltage AC. The DC voltage can for example be obtained from a DC bus, which again via a rectifier not shown in the figure, gets its power from a 400 V AC mains via cable 2, alternatively directly to said DC bus from a battery pack on board the demolition robot 1. The motor control unit 53' further comprises a current sensor 55' that measures respective phase currents to the PMAC motor 15' as well as a speed/position sensor 56' that measures the position and speed of the PMAC motor's outward drive shaft. These data can be addressed back to the control unit 50' via the I/O interface of the control unit.

Due to the invention with a revolution speed-controlled hydraulic pump, a demolition robot is obtained with a compact cheap energy-efficient system. In an embodiment with revolution speed control of a PM motor and thereby pump capacity, the pump effect with flow and pressure of the hydraulic fluid can vary within a large interval, and each flow requirement of consumers can be met with significantly reduced risk of puncture of the system.

By using PWM control, the speed of the PMAC motor can be managed and changed a thousand times per second (i.e. in the kHz area) and thereby at very quick response times and in principle steplessly. This means that the problems of previous demolition robots having long reaction times (response times) of the hydraulic systems can be improved substantially.

## Claims

1. A demolition robot, comprising;
an incoming supply line (P) for hydraulic flow,
an outgoing return line (T) for hydraulic flow, and
an outgoing load-sensing line (LS) for sensing hydraulic load of a hydraulically energized function,
**characterised in that** it comprises
a sensing device (30) for sensing a hydraulic pressure in the load-sensing line (LS),
a regulating device (40) comprising a pump (13') with fixed displacement for generating a hydraulic flow,
a speed adjustable permanent magnet_drive motor (15'), a so-called PM motor, which is coupled to said pump (13)
a motor drive assembly (52') which for revolution speed regulation of the drive motor (15'), comprises
a control unit (50'), which is arranged to receive an electronic measurement signal (31') from the sensing device (30) and via control data (51') control the revolution speed of the drive motor (15') included in the regulating device (40) to cause the pump (13') to bring about a pre-determined pressure on the load-sensing line (LS).

2. A demolition robot according to claim 1 wherein PM motor comprises a permanent magnet motor AC motor, a so-called PMAC motor.

3. A demolition robot according to any one of claims 1,2 wherein the drive motor (15') is of the type that has a revolution speed interval of between 0-3000 revolutions per minute or more.

4. A demolition robot according to any one of claims 1-3, wherein the control unit (50') comprises a PLC or a microprocessor CPU with a computer program, which
- is based on an incoming measuring signal (31') to the control unit (50') for pressure from the sensing device (30),
- a set position of a control stick (8) comprised by the demolition robot (1) for control and management of a hydraulic first and second_consumer (L1, L2) included in the demolition robot, and
- an outgoing control signal (51') from the control unit (50') to a motor drive assembly (52') arranged to the drive motor,
can control and adjust the drive motor's (15') revolution speed, so that the pump (13') can supply the power in the form of flow and pressure of the hydraulic fluid required by the first and/or the second consumer (L1, L2) requests.

5. A demolition device according to any one of claims 1-4, wherein the sensing device (30) comprises a pressure transmitter (PT) and the signal from said pressure transmitter to the control unit (50') is an electronic measuring signal (31') for pressure.

6. A demolition robot according to any one of claims 1-5, comprising a computer-readable storage medium (60') for the control unit (50').

7. A demolition robot according to claim 6, wherein the storage medium (60') can be used for storing, control data, error codes or other useful motor control data from the control unit (50').

8. A method for supplying hydraulic power to a hydraulically powered tool (L1), which is sustained by a demolition robot, according to any of the preceding claims which method comprises the following operational steps;
- via a supply line (P) to supply pressurized hydraulic fluid to the tool (L1) from a hydraulic driving mechanism (13', 15') to a hydraulically energized function included in the tool,
- via a return line (T) to return hydraulic fluid to the hydraulic driving mechanism, and
- via a loan-sensing line (LS) to return a signal pressure for controlling the hydraulic driving mechanism (13', 15'),
**characterized in that**
- a pressure in connection with the load sensing line (LS) is measured,
- the measured pressure is converted into an electronic measuring signal (31'),
- the electronic measuring signal (31') is used for controlling the revolution speed of a permanent magnet motor (15') to cause a fixed displacement pump (13') to achieve a pre-determined pressure on the load-sensing line (LS) based on the measured pressure.

## Patentansprüche

1. Abbruchroboter, umfassend:
eine Eingangsversorgungsleitung (P) für Hydraulikfluss,
eine Ausgangsversorgungsleitung (T) für Hydraulikfluss und
eine Ausgangslasterfassungsleitung (LS) zum Erfassen einer hydraulischen Last einer hydraulisch angeregten Funktion,
**dadurch gekennzeichnet, dass** er Folgendes umfasst:
eine Erfassungsvorrichtung (30) zum Erfassen eines hydraulischen Drucks in der Lasterfassungsleitung (LS), eine Regulierungsvorrichtung (40), die eine Pumpe (13') mit konstanter Verdrängung zum Erzeugen eines Hydraulikflusses umfasst,
einen drehzahlverstellbaren Dauermagnetantriebsmotor (15'), einen sogenannten PM-Motor, der an die Pumpe (13) gekoppelt ist,
eine Motorantriebsbaugruppe (52'), die zur Drehzahlregulierung des Antriebsmotors (15') Folgendes umfasst:
eine Steuereinheit (50'), die angeordnet ist, um ein elektronisches Messsignal (31') von der Erfassungsvorrichtung (30) zu empfangen und die Drehzahl des Antriebsmotors (15'), der in der Regulierungsvorrichtung (40) beinhaltet ist, über Steuerdaten (51') zu steuern, um die Pumpe (13') dazu zu veranlassen, einen vorbestimmten Druck an der Lasterfassungsleitung (LS) hervorzurufen.

2. Abbruchroboter nach Anspruch 1, wobei der PM-Motor einen Dauermagnetmotor-AC-Motor, einen sogenannten PMAC-Motor, umfasst.

3. Abbruchroboter nach einem der Ansprüche 1, 2, wobei der Antriebsmotor (15') von der Art ist, die ein Drehzahlintervall von zwischen 0-3000 Umdrehungen pro Minute oder mehr aufweist.

4. Abbruchroboter nach einem der Ansprüche 1-3, wobei die Steuereinheit (50') eine PLC oder eine Mikroprozessor-CPU mit einem Computerprogramm umfasst, das
- auf einem Eingangsmesssignal (31') an der Steuereinheit (50') für einen Druck von der Erfassungsvorrichtung (30),
- einer eingestellten Position eines Steuerknüppels (8), der zur Steuerung und Verwaltung eines hydraulischen ersten und zweiten Verbrauchers (L1, L2), der in dem Abbruchroboter beinhaltet ist, in dem Abbruchroboter (1) enthalten ist, und
- einem Ausgangssteuersignal (51') von der Steuereinheit (50') an einer Motorantriebsbaugruppe (52') basiert, die an dem Antriebsmotor angeordnet ist,
die Drehzahl des Antriebsmotors (15') steuern und verstellen kann, sodass die Pumpe (13') die Leistung in Form eines Flusses und Drucks des Hydraulikfluids zuführen kann, die durch die Anforderungen des ersten und/oder des zweiten Verbrauchers (L1, L2) erforderlich sind.

5. Abbruchvorrichtung nach einem der Ansprüche 1-4, wobei die Erfassungsvorrichtung (30) einen Druckmessumformer (PT) umfasst und das Signal von dem Druckmessumformer an der Steuereinheit (50') ein elektronisches Messsignal (31') für den Druck ist.

6. Abbruchroboter nach einem der Ansprüche 1-5, umfassend ein computerlesbares Speichermedium (60') für die Steuereinheit (50').

7. Abbruchroboter nach Anspruch 6, wobei das Speichermedium (60') zum Speichern von Steuerdaten, Fehlercodes oder anderen nützlichen Motorsteuerdaten von der Steuereinheit (50') verwendet werden kann.

8. Verfahren zum Versorgen eines hydraulisch angetriebenen Werkzeugs (L1) mit hydraulischer Leistung, das durch einen Abbruchroboter nach einem der vorangehenden Ansprüche unterstützt wird, wobei das Verfahren die folgenden Betriebsschritte umfasst:
- Versorgen des Werkzeugs (L1) mit unter Druck stehendem Hydraulikfluid von einem hydraulischen Antriebsmechanismus (13', 15') über eine Versorgungsleitung (P) an eine hydraulisch angeregte Funktion, die in dem Werkzeug beinhaltet ist,
- Rückführen von Hydraulikfluid über eine Rückführleitung (T) an den hydraulischen Antriebsmechanismus und
- Rückführen eines Signaldrucks zum Steuern des hydraulischen Antriebsmechanismus (13', 15') über eine Lasterfassungsleitung (LS),
**dadurch gekennzeichnet, dass**
- ein Druck in Verbindung mit der Lasterfassungsleitung (LS) gemessen wird,
- der gemessene Druck in ein elektronisches Messsignal (31') umgewandelt wird,
- das elektronische Messsignal (31') zum Steuern der Drehzahl eines Dauermagnetmotors (15') verwendet wird, um eine Konstantpumpe (13') dazu zu veranlassen, einen vorbestimmten Druck an der Lasterfassungsleistung (LS) auf Grundlage des gemessenen Drucks zu erzielen.

## Revendications

1. Robot de démolition, comprenant :
une ligne d'alimentation entrante (P) pour l'écoulement hydraulique,
une ligne de retour sortante (T) pour l'écoulement hydraulique, et
une ligne de détection de charge sortante (LS) pour détecter la charge hydraulique d'une fonction alimentée hydrauliquement,
**caractérisé en ce qu'**il comprend
un dispositif de détection (30) pour détecter une pression hydraulique dans la ligne de détection de charge (LS),
un dispositif de régulation (40) comprenant une pompe (13') à cylindrée fixe pour générer un écoulement hydraulique,
un moteur d'entraînement à aimant permanent réglable en vitesse (15'), un moteur dit PM, qui est couplé à ladite pompe (13)
un ensemble d'entraînement de moteur (52') qui, pour la régulation de la vitesse de rotation du moteur d'entraînement (15'), comprend
une unité de commande (50'), qui est agencée pour recevoir un signal de mesure électronique (31') du dispositif de détection (30) et via des données de commande (51') commander la vitesse de rotation du moteur d'entraînement (15') inclus dans le dispositif de régulation (40) pour amener la pompe (13') à provoquer une pression prédéterminée sur la ligne de détection de charge (LS).

2. Robot de démolition selon la revendication 1 dans lequel le moteur PM comprend un moteur à courant alternatif à moteur à aimant permanent, un moteur dit PMAC.

3. Robot de démolition selon l'une quelconque des revendications 1, 2
dans lequel le moteur d'entraînement (15') est du type qui a un intervalle de vitesse de rotation compris entre 0 et 3000 tours par minute ou plus.

4. Robot de démolition selon l'une quelconque des revendications 1 à 3,
dans lequel l'unité de commande (50') comprend un API ou une UC à microprocesseur avec un programme informatique, qui
- est basé sur un signal de mesure entrant (31') vers l'unité de commande (50') pour la pression provenant du dispositif de détection (30),
- une position définie d'un manche de commande (8) compris par le robot de démolition (1) pour la commande et la gestion d'un premier et second consommateur hydraulique (L1, L2) inclus dans le robot de démolition, et
- un signal de commande sortant (51') provenant de l'unité de commande (50') vers un ensemble d'entraînement de moteur (52') agencé sur le moteur d'entraînement,
- peut commander et régler la vitesse de rotation du moteur d'entraînement (15'), de sorte que la pompe (13') puisse fournir la puissance sous forme d'écoulement et de pression du fluide hydraulique requises par des demandes du premier et/ou du second consommateur (L1, L2).

5. Dispositif de démolition selon l'une quelconque des revendications 1 à 4,
dans lequel le dispositif de détection (30) comprend un transmetteur de pression (PT) et le signal provenant dudit transmetteur de pression vers l'unité de commande (50') est un signal de mesure électronique (31') pour la pression.

6. Robot de démolition selon l'une quelconque des revendications 1 à 5,
comprenant un support de stockage lisible par ordinateur (60') pour l'unité de commande (50').

7. Robot de démolition selon la revendication 6 dans lequel le support de stockage (60') peut être utilisé pour stocker des données de commande, des codes d'erreur ou d'autres données de commande de moteur utiles provenant de l'unité de commande (50').

8. Procédé pour fournir de l'énergie hydraulique à un outil à commande hydraulique (L1), qui est supporté par un robot de démolition, selon l'une quelconque des revendications précédentes, lequel procédé comprend les étapes opérationnelles suivantes ;
- via une ligne d'alimentation (P) pour alimenter l'outil (L1) en fluide hydraulique sous pression depuis un mécanisme d'entraînement hydraulique (13', 15') vers une fonction alimentée hydrauliquement incluse dans l'outil,
- via une ligne de retour (T) pour renvoyer le fluide hydraulique vers le mécanisme d'entraînement hydraulique, et
- via une ligne de détection de charge (LS) pour renvoyer une pression de signal pour commander le mécanisme d'entraînement hydraulique (13', 15'),
**caractérisé en ce que**
- une pression en liaison avec la ligne de détection de charge (LS) est mesurée,
- la pression mesurée est convertie en un signal de mesure électronique (31'),
- le signal de mesure électronique (31') est utilisé pour commander la vitesse de rotation d'un moteur à aimant permanent (15') pour amener une pompe à cylindrée fixe (13') à atteindre une pression prédéterminée sur la ligne de détection de charge (LS) sur la base de la pression mesurée.
